# EUROPÄISCHE PATENTANMELDUNG

(11) **EP 4 484 251 A1**
(43) Veröffentlichungstag der Anmeldung: **01.01.2025**
(21) Anmeldenummer: 23181821.2
(22) Anmeldetag: 27.06.2023
(51) Int. Cl.: B61L 27/60, B61L 27/53

(54) **TESTEINRICHTUNG UND VERFAHREN ZUM TESTEN EINER BAHNSPEZIFISCHEN APPLIKATION**

(71) Anmelder: Siemens Mobility GmbH, 81739 München (DE)
(72) Erfinder: Harms, Lucas, 38527 Meine (DE); Helms, Frank, 38528 Adenbüttel (DE); Pinkert, Tjeerd, 38118 Braunschweig (DE); Salich, Stefan, 38239 Salzgitter (DE)
(74) Vertreter: Siemens Patent Attorneys

(57) **Zusammenfassung**

Die Erfindung bezieht sich unter anderem auf ein Verfahren zum Testen einer zu testenden bahnspezifischen Applikation (APP2). Erfindungsgemäß ist vorgesehen, dass der Test während des Betriebs einer realen Eisenbahnanlage erfolgt unter Einbezug der in Betrieb befindlichen realen Eisenbahnanlage, einer den Betrieb der realen Eisenbahnanlage steuernden Bestandsapplikation, deren Funktion der Funktion der zu testenden bahnspezifischen Applikation bei korrekter Arbeitsweise der zu testenden bahnspezifischen Applikation entsprechen soll, und einer Datenübertragungseinrichtung, die die reale Eisenbahnanlage mit der Bestandsapplikation kommunikationsmä-ßig verbindet, wobei im Rahmen des Verfahrens die zu testende bahnspezifische Applikation über eine Datendiode an die Datenübertragungseinrichtung angeschlossen wird, wobei die Datenflussrichtung der Datendiode in Richtung von der Datenübertragungseinrichtung zu der zu testenden bahnspezifischen Applikation ausgerichtet wird, während des Betriebs der Eisenbahnanlage die Eisenbahnanlage Statussignale über die Datenübertragungseinrichtung an die Bestandsapplikation und über die Datenübertragungseinrichtung und die Datendiode an die zu testende bahnspezifische Applikation übermittelt und die zu testende Applikation und die Bestandsapplikation jeweils Steuersignale erzeugen, die zur Steuerung der Eisenbahnanlage geeignet sind, und zumindest auch dann auf eine inkorrekte Funktion der zu testenden Applikation geschlossen wird, wenn die Steuersignale der zu testenden Applikation und die Steuersignale der Bestandsapplikation in einem vorgegebenen Testzeitraum voneinander abweichen oder über ein vorgegebenes Maß hinaus voneinander abweichen.

## Beschreibung

Die Erfindung bezieht sich auf ein Verfahren zum Testen einer bahnspezifischen Applikation. Unter dem Begriff bahnspezifische Applikation sind beispielsweise Softwareprodukte bzw. Computerprogrammprodukte zu verstehen, die bei Ausführung auf einer geeigneten Plattform, die durch einen Rechner, mehrere Rechner, einen Rechnerverbund oder Cloudrechner gebildet sein kann, eine bahnbezogene Funktion ausüben. Beispielsweise kann eine bahnspezifische Applikation die Funktion eines Stellwerks ausüben, also mit anderen Worten eine Stellwerksapplikation sein.

Der Erfindung liegt die Aufgabe zugrunde, ein Verfahren zum Testen einer bahnspezifischen Applikation anzugeben, das sich mit geringem Aufwand durchführen lässt.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass der Test während des Betriebs einer realen Eisenbahnanlage erfolgt unter Einbezug der in Betrieb befindlichen realen Eisenbahnanlage, einer den Betrieb der realen Eisenbahnanlage steuernden Bestandsapplikation, deren Funktion der Funktion der zu testenden bahnspezifischen Applikation bei korrekter Arbeitsweise der zu testenden bahnspezifischen Applikation entsprechen soll, und einer Datenübertragungseinrichtung, die die reale Eisenbahnanlage mit der Bestandsapplikation kommunikationsmäßig verbindet, wobei im Rahmen des Verfahrens die zu testende bahnspezifische Applikation über eine Datendiode an die Datenübertragungseinrichtung angeschlossen wird, wobei die Datenflussrichtung der Datendiode in Richtung von der Datenübertragungseinrichtung zu der zu testenden bahnspezifischen Applikation ausgerichtet wird, während des Betriebs der Eisenbahnanlage die Eisenbahnanlage Statussignale über die Datenübertragungseinrichtung an die Bestandsapplikation und über die Datenübertragungseinrichtung und die Datendiode an die zu testende bahnspezifische Applikation übermittelt und die zu testende Applikation und die Bestandsapplikation jeweils Steuersignale erzeugen, die zur Steuerung der Eisenbahnanlage geeignet sind, und zumindest auch dann auf eine inkorrekte Funktion der zu testenden Applikation geschlossen wird, wenn die Steuersignale der zu testenden Applikation und die Steuersignale der Bestandsapplikation in einem vorgegebenen Testzeitraum voneinander abweichen oder über ein vorgegebenes Maß hinaus voneinander abweichen.

Ein wesentlicher Vorteil des erfindungsgemäßen Verfahrens ist darin zu sehen, dass dieses mit sehr geringem zusätzlichem Hardware- und Softwareaufwand durchführbar ist. Das erfindungsgemäße Testverfahren basiert im Wesentlichen auf bereits anlagenseitig vorhandener Hardware, weil eine bereits vorhandene Eisenbahnanlage und eine bereits im Einsatz befindliche Bestandsapplikation verwendet werden und der Test anhand realer Szenarien durchgeführt wird. Da realer Betrieb in das Testen eingebunden wird, müssen - im Gegensatz beispielsweise zu anderen Testverfahren - also ingenieurseitig keine speziellen Testalgorithmen entworfen werden.

Falls auf eine inkorrekte Funktion der zu testenden Applikation geschlossen wird bzw. eine solche festgestellt wird, wird vorzugsweise ein Fehlersignal erzeugt.

Eine Abweichung zwischen den Steuersignalen über das vorgegebene Maß hinaus kann beispielsweise festgestellt und das Fehlersignal erzeugt werden, wenn
- sich die Steuersignale inhaltlich unterscheiden,
- die Steuersignale über das vorgesehene Maß hinaus zeitversetzt sind, weil beispielsweise die zu testende Applikation zu langsam arbeitet,
- die zu testende Applikation Steuersignale erzeugt, die nicht zu erzeugen sind, oder
- die zu testende Applikation nötige Steuersignale nicht erzeugt.

Die obige Aufzählung möglicher Abweichungen zwischen den Steuersignalen ist beispielhaft zu verstehen und nicht abschließend.

Als vorteilhaft wird es angesehen, wenn die Bestandsapplikation auf der Basis der Statussignale den Zustand der Eisenbahnanlage beschreibende erste Berichtssignale erzeugt und diese an eine der Bestandsapplikation übergeordnete Bedieneinheit übermittelt, die zu testende Applikation auf der Basis der Statussignale den Zustand der Eisenbahnanlage beschreibende zweite Berichtssignale erzeugt und diese ausgibt und zumindest auch dann auf eine inkorrekte Funktion der zu testenden Applikation geschlossen wird, wenn die ersten und zweiten Berichtssignale in dem vorgegebenen Testzeitraum voneinander abweichen oder über das oder ein anderes vorgegebene Maß hinaus voneinander abweichen.

Eine Abweichung zwischen den Berichtssignalen über das vorgegebene Maß hinaus kann beispielsweise festgestellt und das Fehlersignal erzeugt werden, wenn
- sich die Berichtssignale inhaltlich unterscheiden,
- die Berichtssignale über das vorgesehene Maß hinaus zeitversetzt sind, weil beispielsweise die zu testende Applikation zu langsam arbeitet,
- die zu testende Applikation Berichtssignale erzeugt, die nicht zu erzeugen sind, oder
- die zu testende Applikation nötige Berichtssignale nicht erzeugt.

Die obige Aufzählung möglicher Abweichungen zwischen den Berichtssignalen ist beispielhaft zu verstehen und nicht abschließend.

Bei der letztgenannten Ausführungsvariante wird es als vorteilhaft angesehen, wenn die Bedieneinheit auf der Basis der ersten Berichtssignale Steuerbefehle erzeugt und diese an die Bestandsapplikation sowie rückwirkungsfrei an die zu testende Applikation übermittelt, die Bestandsapplikation ihre Steuersignale als Reaktion auf die Steuerfehle der Bedieneinheit in Form erster steuerbefehlskonformer Steuersignale erzeugt und diese an die Eisenbahnanlage übermittelt, die zu testende Applikation ihre Steuersignale als Reaktion auf die Steuerfehle der Bedieneinheit in Form zweiter steuerbefehlskonformer Steuersignale erzeugt und ausgibt und zumindest auch dann auf eine inkorrekte Funktion der zu testenden Applikation geschlossen wird, wenn die ersten und zweiten steuerbefehlskonformen Steuersignale in dem vorgegebenen Testzeitraum voneinander abweichen oder über das oder ein anderes vorgegebene Maß hinaus voneinander abweichen.

Bei einer bevorzugten Ausgestaltung ist vorgesehen, dass die Datenübertragungseinrichtung die Bestandsapplikation und die zu testende Applikation jeweils sowohl mit der Eisenbahnanlage als auch mit der Bedieneinheit verbindet.

Bei einer anderen bevorzugten Ausgestaltung ist vorgesehen, dass zusätzlich zu der Datenübertragungseinrichtung eine zweite Datenübertragungseinrichtung vorhanden ist, die sowohl die Bestandsapplikation als auch die zu testende Applikation mit der Bedieneinheit verbindet, wobei eine zweite Datendiode zwischen die zweite Datenübertragungseinrichtung und die zu testenden Applikation geschaltet wird und die Datenflussrichtung der zweiten Datendiode in Richtung zu der zu testenden Applikation ausgerichtet wird.

Die zu testende bahnspezifische Applikation ist vorzugsweise eine Stellwerksapplikation, die anhand einer Bestandsapplikation in Form einer im realen Einsatz befindlichen Bestandsstellwerksapplikation getestet wird, wobei die im realen Einsatz befindliche Bestandsstellwerksapplikation die Eisenbahngleisanlage während des Tests der zu testenden Applikation real steuert. Im Falle einer zu testenden Stellwerksapplikation beträgt die Testdauer je nach Auslastung der zum Test herangezogenen Eisenbahnanlage vorzugsweise mindestens zwei Wochen und/oder mindestens so lange, bis im Eisenbahnbetrieb Wiederholungen im Betriebsablauf stattfinden.

Die zu testende bahnspezifische Applikation und die Bestandsapplikation werden vorzugsweise auf unterschiedlichen Plattformen betrieben.

Die zu testende bahnspezifische Applikation wird vorzugsweise auf einer Cloud-Plattform betrieben.

Die Erfindung bezieht sich außerdem auf eine Testeinrichtung zum Testen einer bahnspezifischen Applikation, insbesondere zur Durchführung eines Verfahrens wie oben beschrieben.

Bezüglich der Testeinrichtung ist erfindungsgemäß vorgesehen, dass diese umfasst: eine den Betrieb einer realen Eisenbahnanlage steuernde Bestandsapplikation, deren Funktion der Funktion der zu testenden bahnspezifischen Applikation bei korrekter Arbeitsweise der zu testenden bahnspezifischen Applikation entsprechen soll, eine erste Datenübertragungseinrichtung, die die reale Eisenbahnanlage mit der Bestandsapplikation kommunikationsmäßig verbindet, einen ersten Applikationsanschluss zum Anschluss der zu testenden Applikation an die erste Datenübertragungseinrichtung, wobei zwischen die erste Datenübertragungseinrichtung und den ersten Applikationsanschluss eine erste Datendiode geschaltet ist, deren Datenausgang an den ersten Applikationsanschluss und deren Dateneingang an die erste Datenübertragungseinrichtung angeschlossen ist, eine Vergleichseinheit, die zum Empfang von Steuersignalen, die die Bestandsapplikation an die Eisenbahnanlage übermittelt, und Steuersignalen der zu testenden Applikation, die diese im Testbetrieb in Richtung des ersten Applikationsanschlusses ausgibt, geeignet ist, wobei die Vergleichseinheit mit der Eisenbahnanlage und der Bestandsapplikation unidirektional und rückwirkungsfrei in Verbindung steht. Die Vergleichseinheit ist dazu ausgestaltet, zumindest auch dann auf eine inkorrekte Funktion der zu testenden Applikation zu schließen, wenn die Steuersignale der zu testenden Applikation und die Steuersignale der Bestandsapplikation in einem vorgegebenen Testzeitraum voneinander abweichen oder über ein vorgegebenes Maß hinaus voneinander abweichen.

Die Testeinrichtung weist vorzugsweise eine der Bestandsapplikation übergeordnete Bedieneinheit auf.

Die Vergleichseinheit ist bevorzugt dazu ausgestaltet, erste Berichtssignale, die die Bestandsapplikation an die Bedieneinheit übermittelt, und zweite Berichtssignale, die die zu testende Applikation ausgangsseitig ausgibt, zu vergleichen und auf eine inkorrekte Funktion der zu testenden Applikation zumindest auch dann zu schließen, wenn die ersten und zweiten Berichtssignale in dem vorgegebenen Testzeitraum voneinander abweichen oder über das oder ein anderes vorgegebene Maß hinaus voneinander abweichen.

Zusätzlich zu der ersten Datenübertragungseinrichtung ist vorzugsweise eine zweite Datenübertragungseinrichtung vorhanden, die sowohl die Bestandsapplikation als auch einen zweiten Applikationsanschluss, über den die zu testende Applikation an die zweite Datenübertragungseinrichtung anschließbar ist, mit der Bedieneinheit verbinden kann, wobei eine zweite Datendiode zwischen die zweite Datenübertragungseinrichtung und den zweiten Applikationsanschluss geschaltet ist, und wobei die Datenflussrichtung der zweiten Datendiode in Richtung des zweiten Applikationsanschlusses ausgerichtet ist.

Mit Blick auf Rückwirkungsfreiheit wird es als vorteilhaft angesehen, wenn zusätzlich eine dritte Datendiode zwischen die Vergleichseinheit und die erste Datenübertragungseinrichtung geschaltet ist, wobei die Datenflussrichtung der dritten Datendiode in Richtung der Vergleichseinheit ausgerichtet ist.

Auch ist vorzugsweise zusätzlich eine vierte Datendiode zwischen die Vergleichseinheit und die zweite Datenübertragungseinrichtung geschaltet, wobei die Datenflussrichtung der vierten Datendiode in Richtung der Vergleichseinheit ausgerichtet ist.

Die Erfindung wird nachfolgend anhand von Ausführungsbeispielen näher erläutert; dabei zeigen beispielhaft:
- Figur 1: ein Ausführungsbeispiel für eine erfindungsgemäße Testeinrichtung, die zum Testen einer bahnspezifischen Applikation geeignet ist, wobei die Testeinrichtung zwei Datenübertragungseinrichtungen umfasst, und
- Fig. 2-3: Ausführungsbeispiele für erfindungsgemäße Testeinrichtungen mit einer Datenübertragungseinrichtung.

In den Figuren werden der Übersicht halber für identische oder vergleichbare Komponenten stets dieselben Bezugszeichen verwendet.

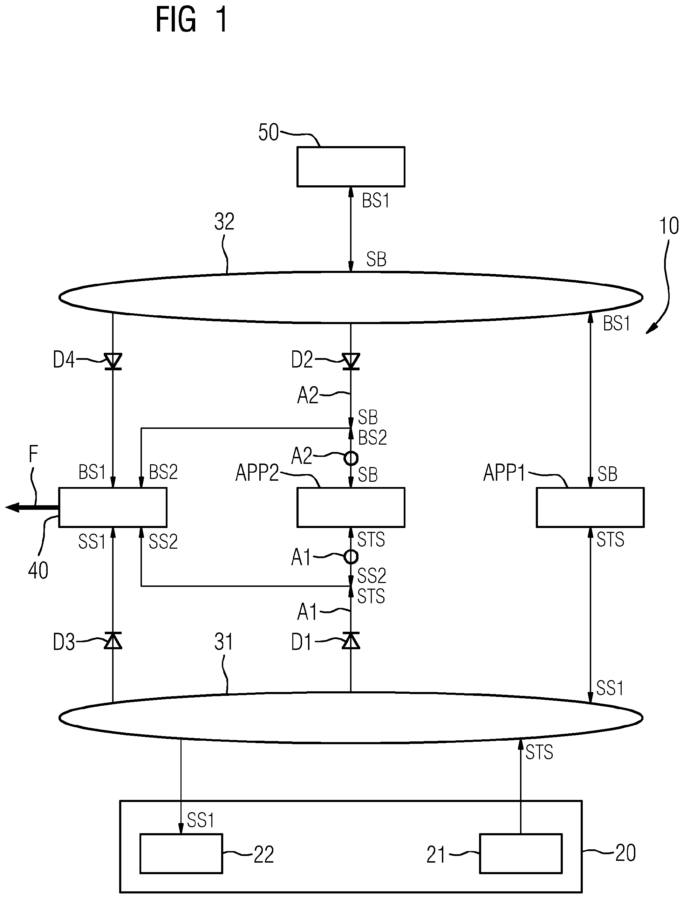

Die Figur 1 zeigt ein Ausführungsbeispiel für eine Testeinrichtung 10, die zum Testen einer bahnspezifischen Applikation APP2 geeignet ist.

Bei der zu testenden bahnspezifischen Applikation APP2 handelt es sich bei dem Ausführungsbeispiel gemäß Figur 1 um eine Stellwerksapplikation. Die zu testende Stellwerksapplikation kann beispielsweise auf einer Cloudplattform betrieben werden.

Zum Anschluss der zu testenden Applikation APP2 weist die Testeinrichtung 10 einen ersten Applikationsanschluss A1 und einen zweiten Applikationsanschluss A2 auf. Die beiden Applikationsanschlüsse A1 und A2 sind als Datenanschlüsse ausgestaltet und können beispielsweise Ethernetanschlüsse sein.

Die Testeinrichtung 10 umfasst eine den Betrieb einer realen Eisenbahnanlage 20 steuernde Bestandsapplikation APP1, bei der es sich ebenfalls um eine Stellwerksapplikation handelt. Die Bestandsapplikation APP1 wird beispielsweise auf einem in der Figur aus Gründen der Übersicht nicht gezeigten Stellwerksrechner betrieben, der die Plattform für den Betrieb der Bestandsapplikation APP1 zur Verfügung stellt.

Die Bestandsapplikation APP1 ist schon früher getestet worden und befindet sich im realen Betrieb. Die Bestandsapplikation APP1 kann somit als vertrauenswürdig, da betriebsbewährt, angesehen und als Referenz für den Testbetrieb herangezogen werden.

Die Funktion der zu testenden bahnspezifischen Applikation APP2 soll bei korrekter Arbeitsweise der Funktion der Bestandsapplikation APP1 entsprechen; wird dies im Rahmen des Tests bestätigt, so gilt der Test als bestanden und die zu testende Applikation APP2 kann im realen Betrieb der Eisenbahnanlage 20 eingesetzt werden, beispielsweise, um die Bestandsapplikation APP1 zukünftig zu ersetzen und den Stellwerksrechner durch ein Cloudrechnersystem zu ersetzen.

Die Testeinrichtung 10 umfasst bei dem Ausführungsbeispiel gemäß Figur 1 außerdem eine erste Datenübertragungseinrichtung 31 und eine zweite Datenübertragungseinrichtung 32. Die beiden Datenübertragungseinrichtungen 31 und 32 können beispielsweise jeweils Ethernetnetzwerke sein. Alternativ kann vorgesehen sein, dass die erste Datenübertragungseinrichtung 31 ein anlageninternes Ethernet-Netzwerk und die zweite Datenübertragungseinrichtung 32 das Internet oder ein das Internet einbeziehendes Netzwerk ist.

Die erste Datenübertragungseinrichtung 31 verbindet die reale Eisenbahnanlage 20 kommunikationsmäßig mit der Bestandsapplikation APP1, dem ersten Applikationsanschluss A1 und einer Vergleichseinheit 40.

Die zweite Datenübertragungseinrichtung 32 verbindet sowohl die Bestandsapplikation APP1 als auch den zweiten Applikationsanschluss A2 mit einer Bedieneinheit 50. Die Bedieneinheit 50 ermöglicht Bedienpersonal die Steuerung der durch die Bestandsapplikation APP1 bereitgestellten Stellwerksfunktionalität und damit die Steuerung der Eisenbahnanlage 20.

Um eine Rückwirkungsfreiheit der zu testenden Applikation APP2 mit Blick auf die Eisenbahnanlage 20 zu gewährleisten bzw. einen Einfluss der zu testenden Applikation APP2 auf die Eisenbahnanlage 20 zu verhindern, ist zwischen die erste Datenübertragungseinrichtung 31 und den ersten Applikationsanschluss A1 eine erste Datendiode D1 geschaltet. Der Datenausgang der ersten Datendiode D1 ist an den ersten Applikationsanschluss A1 angeschlossen und der Dateneingang der ersten Datendiode D1 ist an die erste Datenübertragungseinrichtung 31 angeschlossen. Durch diese Ausrichtung bzw. datenflussmäßige Polung der ersten Datendiode D1 wird sichergestellt, dass die zu testende Applikation APP2 keine Daten in die erste Datenübertragungseinrichtung 31 einspeisen kann und auch keine Steuersignale SS2 der zu testenden Applikation APP2 zu der Eisenbahnanlage 20 gelangen können.

Um eine Rückwirkungsfreiheit der zu testenden Applikation APP2 auch mit Blick auf die Bedieneinheit 50 zu gewährleisten bzw. eine Beeinflussung der Bedieneinheit 50 - beispielsweise durch Einspeisen von Berichtssignalen BS2 der zu testenden Applikation APP2 - zu verhindern, ist zwischen die zweite Datenübertragungseinrichtung 32 und den zweiten Applikationsanschluss A2 eine zweite Datendiode D2 geschaltet.

Der Datenausgang der zweiten Datendiode D2 ist an den zweiten Applikationsanschluss A2 angeschlossen und der Dateneingang der zweiten Datendiode D2 ist an die zweite Datenübertragungseinrichtung 32 angeschlossen. Durch diese Ausrichtung bzw. datenflussmäßige Polung der zweiten Datendiode D2 wird sichergestellt, dass die zu testende Applikation APP2 keine Daten in die zweite Datenübertragungseinrichtung 32 einspeisen kann und auch keine Berichtssignale BS2 der zu testenden Applikation APP2 zu der Bedieneinheit 50 gelangen.

Die Testeinrichtung 10 umfasst bei dem Ausführungsbeispiel gemäß Figur 1 außerdem eine Vergleichseinheit 40. Die Vergleichseinheit 40 dient dazu, die Arbeitsweise der zu testenden Applikation APP2 mit der der Bestandsapplikation APP1 zu vergleichen.

Um eine Rückwirkungsfreiheit der Vergleichseinheit 40 mit Blick auf die erste Datenübertragungseinrichtung 31 zu gewährleisten bzw. einen Einfluss der Vergleichseinheit 40 auf die Eisenbahnanlage 20 zu verhindern, ist zwischen die erste Datenübertragungseinrichtung 31 und die Vergleichseinheit 40 eine dritte Datendiode D3 geschaltet, deren Datenausgang an die Vergleichseinheit 40 und deren Dateneingang an die erste Datenübertragungseinrichtung 31 angeschlossen ist.

Um eine Rückwirkungsfreiheit der Vergleichseinheit 40 mit Blick auf die zweite Datenübertragungseinrichtung 32 zu gewährleisten bzw. einen Einfluss der Vergleichseinheit 40 auf die Bedieneinheit 50 zu verhindern, ist zwischen die zweite Datenübertragungseinrichtung 32 und die Vergleichseinheit 40 eine vierte Datendiode D4 geschaltet, deren Datenausgang an die Vergleichseinheit 40 und deren Dateneingang an die zweite Datenübertragungseinrichtung 32 angeschlossen ist.

Die Testeinrichtung 10 gemäß Figur 1 arbeitet vorzugsweise wie folgt:
Während des normalen Betriebs der Eisenbahnanlage 20 steuert die Bestandsapplikation APP1 den Fahrbetrieb. Dabei erzeugen anlagenseitige Sensoren 21 der Eisenbahnanlage 20 Statussignale STS, die über die erste Datenübertragungseinrichtung 31 zu der Bestandsapplikation APP1 gelangen. Bei den Sensoren 21 kann es sich beispielsweise um Weichenlagesensoren, Gleisfreimeldeeinrichtungen oder dergleichen handeln.

Die Bestandsapplikation APP1 wertet die Statussignale STS aus und erzeugt (erste) Berichtssignale BS1, die sie über die zweite Datenübertragungseinrichtung 32 an die übergeordnete Bedieneinheit 50 überträgt. Die Berichtssignale BS1 beschreiben den jeweiligen Betriebszustand der Eisenbahnanlage 20 und ermöglichen der Bedieneinheit 50 eine korrekte Abbildung des Anlagenstatus.

Die Bedieneinheit 50 kann von Bedienpersonal in Kenntnis des Anlagenstatus bedient werden. Zu diesem Zweck kann das Bedienpersonal Befehle in die Bedieneinheit 50 eingegeben, die die Bedieneinheit 50 als Steuerbefehle SB über die zweite Datenübertragungseinrichtung 32 an die Bestandsapplikation APP1 weiterleitet. Die Bestandsapplikation APP1 wertet diese Steuerbefehle SB aus und erzeugt ihrerseits (erste) Steuersignale SS1, die sie über die erste Datenübertragungseinrichtung 31 zu Aktoren 22 der Eisenbahnanlage 20 überträgt. Bei den Aktoren 22 kann es sich beispielsweise um Weichenantriebe, Lichtsignale oder dergleichen handeln.

Beispielsweise kann ein Statussignal STS anzeigen, dass eine Weichenlage umgestellt worden ist, und das korrespondierende Berichtssignal BS1 kann die neue Weichenlage an die Bedieneinheit 50 übermitteln. Ein seitens des Bedienpersonals in die Bedieneinheit 50 eingegebener Befehl und der korrespondierende Steuerbefehl SB können beispielsweise das Umstellen eines Lichtsignals anweisen, woraufhin die Bestandsapplikation APP1 durch Ausgabe eines entsprechenden (ersten) Steuersignals SS1 an den korrespondierenden Aktor, hier also an das Lichtsignal, das reale Umstellen des Lichtsignals auslöst.

Da die zu testende Applikation APP2 datenflussmäßig parallel zu der Bestandsapplikation APP1 geschaltet ist, erhält sie sowohl die Statussignale STS der Eisenbahnanlage 20 als auch die Steuerbefehle SB der Bedieneinheit 50 und erzeugt ihrerseits eigene (bzw. zweite) Berichtssignale BS2, die sie sowohl in Richtung der zweiten Datenübertragungseinrichtung und die Bedieneinheit 50 als auch in Richtung der Vergleichseinheit 40 ausgibt, sowie eigene (bzw. zweite) Steuersignale SS2, die sie sowohl in Richtung der ersten Datenübertragungseinrichtung 31 und der Eisenbahnanlage 20 als auch in Richtung der Vergleichseinheit 40 ausgibt.

Wegen der aus Sicht der zu testenden Applikation APP2 in Sperrrichtung geschalteten Datendioden D1 und D2 erreichen die Berichtssignale BS2 und die Steuersignale SS2 der zu testenden Applikation APP2 lediglich die Vergleichseinheit 40, aber weder die Bedieneinheit 50 noch die Eisenbahnanlage 20. Die zu testende Applikation APP2 ist also für den realen Betrieb der Eisenbahnanlage 20 rückwirkungsfrei.

Die Vergleichseinheit 40 empfängt die Steuersignale SS1, die die Bestandsapplikation APP1 an die Eisenbahnanlage 20 übermittelt, sowie die Steuersignale SS2 der zu testenden Applikation APP2, die diese im Testbetrieb in Richtung des ersten Applikationsanschlusses A1 ausgibt. Darüber hinaus empfängt die Vergleichseinheit 40 die Berichtssignale BS1, die die Bestandsapplikation APP1 an die Bedieneinheit 50 übermittelt, und die Berichtssignale BS2, die die zu testende Applikation APP2 ausgangsseitig ausgibt.

Die Vergleichseinheit 40 vergleicht die Steuersignale SS2 der zu testenden Applikation APP2, die diese im Testbetrieb in Richtung des ersten Applikationsanschlusses A1 ausgibt, mit den realen Steuersignalen SS1, die die Bestandsapplikation APP1 ausgibt, und schließt auf eine inkorrekte Funktion der zu testenden Applikation APP2, wenn die Steuersignale SS1 und SS2 in einem vorgegebenen Testzeitraum voneinander abweichen oder über ein vorgegebenes Maß hinaus voneinander abweichen.

Eine Abweichung zwischen den Steuersignalen SS1 und SS2 über das vorgegebene Maß hinaus kann beispielsweise darin bestehen, dass
- sich die Steuersignale SS1 und SS2 inhaltlich unterscheiden,
- die Steuersignale SS1 und SS2 über das vorgesehene Maß hinaus zeitversetzt sind, weil beispielsweise die zu testende Applikation APP2 zu langsam arbeitet,
- die zu testende Applikation APP2 Steuersignale SS2 erzeugt, die nicht zu erzeugen sind, oder
- die zu testende Applikation APP2 nötige Steuersignale nicht erzeugt.

Die Vergleichseinheit 40 vergleicht außerdem die Berichtssignale BS2 der zu testenden Applikation APP2, die diese im Testbetrieb in Richtung des zweiten Applikationsanschlusses A2 ausgibt, mit den realen Berichtssignalen BS1, die die Bestandsapplikation APP1 ausgibt, und schließt außerdem auf eine inkorrekte Funktion der zu testenden Applikation APP2, wenn die Berichtssignale BS1 und BS2 in dem vorgegebenen Testzeitraum voneinander abweichen oder über ein vorgegebenes Maß hinaus voneinander abweichen.

Eine Abweichung der Berichtssignale BS1 und BS2 über das vorgegebene Maß hinaus kann beispielsweise darin bestehen, dass
- sich die Berichtssignale BS1 und BS2 inhaltlich unterscheiden,
- die Berichtssignale BS1 und BS2 über das vorgesehene Maß hinaus zeitversetzt sind, weil beispielsweise die zu testende Applikation APP2 zu langsam arbeitet,
- die zu testende Applikation APP2 Berichtssignale BS2 erzeugt, die nicht zu erzeugen sind, oder
- die zu testende Applikation APP2 nötige Berichtssignale nicht erzeugt.

Stellt die Vergleichseinheit 40 eine inkorrekte Funktion der zu testenden Applikation APP2 fest, so erzeugt sie vorzugsweise ein Fehlersignal F.

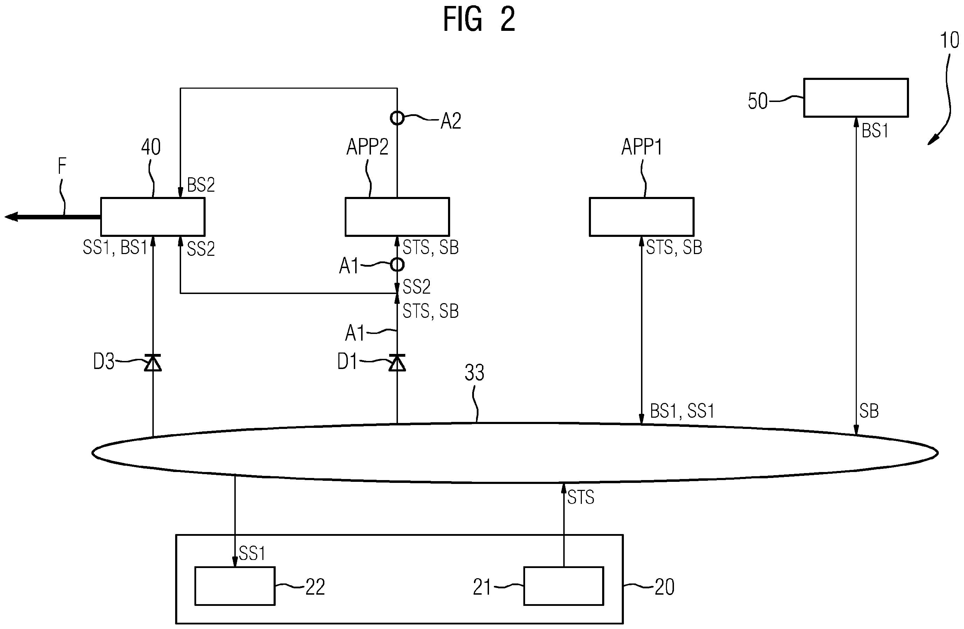

Die Figur 2 zeigt ein weiteres Ausführungsbeispiel für eine Testeinrichtung 10, die zum Testen einer bahnspezifischen Applikation APP2 geeignet ist.

Die Testeinrichtung 10 umfasst bei dem Ausführungsbeispiel gemäß Figur 2 lediglich eine Datenübertragungseinrichtung 33, die die Eisenbahnanlage 20, die Bestandsapplikation APP1, die zu testende Applikation APP2, die Vergleichseinheit 40 und die Bedieneinheit 50 verbindet.

Bei der Datenübertragungseinrichtung 33 kann es sich beispielsweise um ein anlageninternes Ethernet-Netzwerk, das Internet oder ein das Internet einbeziehendes Netzwerk handeln.

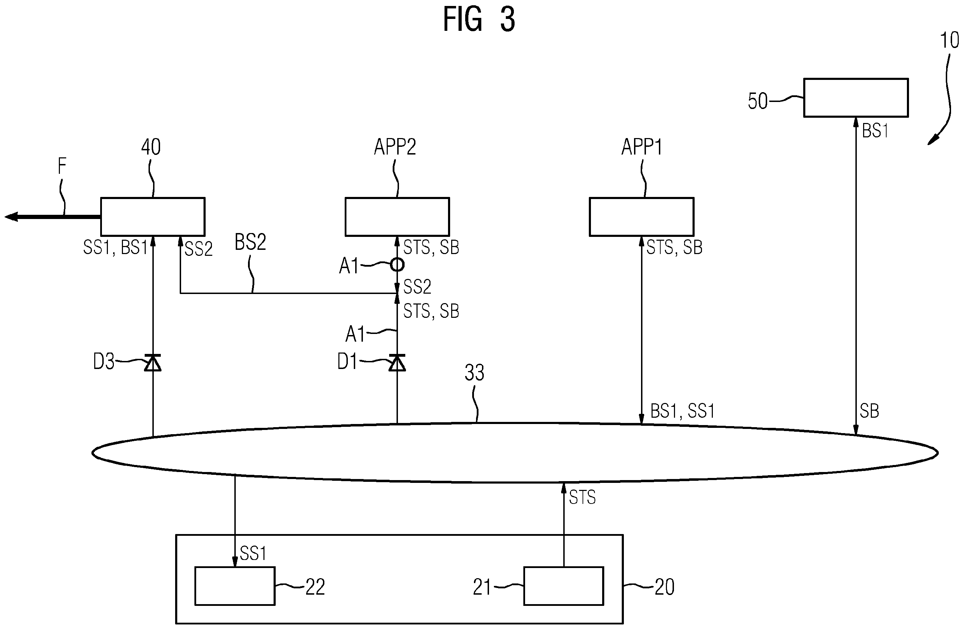

Da die Bedieneinheit 50 ihre Steuerbefehle SB in die Datenübertragungseinrichtung 33 einspeist, können diese über den ersten Applikationsanschluss A1 zu der zu testenden Applikation APP2 gelangen. Die zu testende Applikation APP2 kann ihre Berichtssignale BS2 wahlweise über einen zweiten Applikationsanschluss A2 der Testeinrichtung 10 zu der Vergleichseinheit 40 übersenden, sofern ein solcher wie in Figur 2 gezeigt vorhanden ist, oder alternativ über den ersten Applikationsanschluss A1, wie beispielhaft die Figur 3 zeigt.

Die Rückwirkungsfreiheit der zu testenden Applikation APP2 und der Vergleichseinheit 40 kann bei den Ausführungsbeispielen gemäß den Figuren 2 und 3 mit lediglich zwei Datendioden D1 und D3 gewährleistet werden.

Im Übrigen gelten die obigen Erläuterungen im Zusammenhang mit der Testeinrichtung 10 gemäß Figur 1 für die Ausführungsbeispiele gemäß den Figuren 2 und 3 entsprechend.

Abschließend sei erwähnt, dass die Merkmale aller oben beschriebenen Ausführungsbeispiele untereinander in beliebiger Weise kombiniert werden können, um weitere andere Ausführungsbeispiele der Erfindung zu bilden.

Auch können alle Merkmale von Unteransprüchen jeweils für sich mit jedem der nebengeordneten Ansprüche kombiniert werden, und zwar jeweils für sich allein oder in beliebiger Kombination mit einem oder mehreren anderen Unteransprüchen, um weitere andere Ausführungsbeispiele zu erhalten.

Unabhängig vom grammatikalischen Geschlecht eines bestimmten Begriffes sind Personen mit männlicher, weiblicher oder anderer Geschlechteridentität mit umfasst.

### Bezugszeichenliste

- 10: Testeinrichtung
- 20: Eisenbahnanlage
- 21: anlagenseitige Sensoren
- 22: Aktoren
- 31: erste Datenübertragungseinrichtung
- 32: zweite Datenübertragungseinrichtung
- 33: Datenübertragungseinrichtung
- 40: Vergleichseinheit
- 50: Bedieneinheit

- A1: erster Applikationsanschluss
- A2: zweiter Applikationsanschluss
- APP1: betriebsbewährte bahnspezifische Bestandsapplikation
- APP2: zu testende bahnspezifische Applikation
- BS1: Berichtssignale
- BS2: Berichtssignale
- D1: erste Datendiode
- D2: zweite Datendiode
- D3: dritte Datendiode
- D4: vierte Datendiode
- F: Fehlersignal
- SB: Steuerbefehle
- SS1: Steuersignale
- SS2: Steuersignale
- STS: Statussignale

## Patentansprüche

1. Verfahren zum Testen einer zu testenden bahnspezifischen Applikation (APP2),
**dadurch gekennzeichnet, dass** der Test während des Betriebs einer realen Eisenbahnanlage (20) erfolgt unter Einbezug
- der in Betrieb befindlichen realen Eisenbahnanlage (20),
- einer den Betrieb der realen Eisenbahnanlage (20) steuernden Bestandsapplikation (APP1), deren Funktion der Funktion der zu testenden bahnspezifischen Applikation (APP2) bei korrekter Arbeitsweise der zu testenden bahnspezifischen Applikation (APP2) entsprechen soll, und
- einer Datenübertragungseinrichtung (31), die die reale Eisenbahnanlage (20) mit der Bestandsapplikation (APP1) kommunikationsmäßig verbindet,
wobei im Rahmen des Verfahrens
- die zu testende bahnspezifische Applikation (APP2) über eine Datendiode (D1) an die Datenübertragungseinrichtung (31) angeschlossen wird, wobei die Datenflussrichtung der Datendiode (D1) in Richtung von der Datenübertragungseinrichtung (31) zu der zu testenden bahnspezifischen Applikation (APP2) ausgerichtet wird,
- während des Betriebs der Eisenbahnanlage (20) die Eisenbahnanlage (20) Statussignale (STS) über die Datenübertragungseinrichtung (31) an die Bestandsapplikation (APP1) und über die Datenübertragungseinrichtung (31) und die Datendiode (D1) an die zu testende bahnspezifische Applikation (APP2) übermittelt und die zu testende Applikation (APP2) und die Bestandsapplikation (APP1) jeweils Steuersignale (SS1, SS2) erzeugen, die zur Steuerung der Eisenbahnanlage (20) geeignet sind, und
- zumindest auch dann auf eine inkorrekte Funktion der zu testenden Applikation (APP2) geschlossen wird, wenn die Steuersignale (SS2) der zu testenden Applikation (APP2) und die Steuersignale (SS1) der Bestandsapplikation (APP1) in einem vorgegebenen Testzeitraum voneinander abweichen oder über ein vorgegebenes Maß hinaus voneinander abweichen.

2. Verfahren nach Anspruch 1,
- **dadurch gekennzeichnet, dass**
- die Bestandsapplikation (APP1) auf der Basis der Statussignale (STS) den Zustand der Eisenbahnanlage (20) beschreibende erste Berichtssignale (BS1) erzeugt und diese an eine der Bestandsapplikation (APP1) übergeordnete Bedieneinheit (50) übermittelt,
- die zu testende Applikation (APP2) auf der Basis der Statussignale (STS) den Zustand der Eisenbahnanlage (20) beschreibende zweite Berichtssignale (BS2) erzeugt und diese ausgibt und
- zumindest auch dann auf eine inkorrekte Funktion der zu testenden Applikation (APP2) geschlossen wird, wenn die ersten und zweiten Berichtssignale (BS1, BS2) in dem vorgegebenen Testzeitraum voneinander abweichen oder über das oder ein anderes vorgegebene Maß hinaus voneinander abweichen.

3. Verfahren nach Anspruch 2,
- **dadurch gekennzeichnet, dass**
- die Bedieneinheit (50) auf der Basis der ersten Berichtssignale (BS1) Steuerbefehle (SB) erzeugt und diese an die Bestandsapplikation (APP1) sowie rückwirkungsfrei an die zu testende Applikation (APP2) übermittelt,
- die Bestandsapplikation (APP1) ihre Steuersignale (SS1) als Reaktion auf die Steuerfehle (SB) der Bedieneinheit (50) in Form erster steuerbefehlskonformer Steuersignale (SS1) erzeugt und diese an die Eisenbahnanlage (20) übermittelt,
- die zu testende Applikation (APP2) ihre Steuersignale (SS2) als Reaktion auf die Steuerfehle (SB) der Bedieneinheit (50) in Form zweiter steuerbefehlskonformer Steuersignale (SS2) erzeugt und ausgibt und
- zumindest auch dann auf eine inkorrekte Funktion der zu testenden Applikation (APP2) geschlossen wird, wenn die ersten und zweiten steuerbefehlskonformen Steuersignale (SS1, SS2) in dem vorgegebenen Testzeitraum voneinander abweichen oder über das oder ein anderes vorgegebene Maß hinaus voneinander abweichen.

4. Verfahren nach einem der voranstehenden Ansprüche,
**dadurch gekennzeichnet, dass** die Datenübertragungseinrichtung (31) die Bestandsapplikation (APP1) und die zu testende Applikation (APP2) jeweils sowohl mit der Eisenbahnanlage (20) als auch mit der Bedieneinheit (50) verbindet.

5. Verfahren nach einem der voranstehenden Ansprüche 1 bis 3,
- **dadurch gekennzeichnet, dass**
- zusätzlich zu der Datenübertragungseinrichtung (31) eine zweite Datenübertragungseinrichtung (32) vorhanden ist, die sowohl die Bestandsapplikation (APP1) als auch die zu testende Applikation (APP2) mit der Bedieneinheit (50) verbindet, wobei eine zweite Datendiode (D2) zwischen die zweite Datenübertragungseinrichtung (32) und die zu testenden Applikation (APP2) geschaltet wird und die Datenflussrichtung der zweiten Datendiode (D2) in Richtung zu der zu testenden Applikation (APP2) ausgerichtet wird.

6. Verfahren nach einem der voranstehenden Ansprüche,
- **dadurch gekennzeichnet, dass**
- die zu testende bahnspezifische Applikation (APP2) eine Stellwerksapplikation ist, die anhand einer Bestandsapplikation (APP1) in Form einer im realen Einsatz befindlichen Bestandsstellwerksapplikation getestet wird,
- wobei die im realen Einsatz befindliche Bestandsstellwerksapplikation die Eisenbahngleisanlage während des Tests der zu testenden Applikation (APP2) real steuert.

7. Verfahren nach einem der voranstehenden Ansprüche,
**dadurch gekennzeichnet, dass** die zu testende bahnspezifische Applikation (APP2) und die Bestandsapplikation (APP1) auf unterschiedlichen Plattformen betrieben werden.

8. Verfahren nach einem der voranstehenden Ansprüche,
**dadurch gekennzeichnet, dass** die zu testende bahnspezifische Applikation (APP2) auf einer Cloud-Plattform betrieben wird.

9. Testeinrichtung zum Testen einer bahnspezifischen Applikation (APP2), insbesondere zur Durchführung eines Verfahrens nach einem der voranstehenden Ansprüche,
**dadurch gekennzeichnet, dass**
die Testeinrichtung umfasst
- eine den Betrieb einer realen Eisenbahnanlage (20) steuernde Bestandsapplikation (APP1), deren Funktion der Funktion der zu testenden bahnspezifischen Applikation (APP2) bei korrekter Arbeitsweise der zu testenden bahnspezifischen Applikation (APP2) entsprechen soll,
- eine erste Datenübertragungseinrichtung (31), die die reale Eisenbahnanlage (20) mit der Bestandsapplikation (APP1) kommunikationsmäßig verbindet,
- einen ersten Applikationsanschluss (A1) zum Anschluss der zu testenden Applikation (APP2) an die erste Datenübertragungseinrichtung (31), wobei zwischen die erste Datenübertragungseinrichtung (31) und den ersten Applikationsanschluss (A1) eine erste Datendiode (D1) geschaltet ist, deren Datenausgang an den ersten Applikationsanschluss (A1) und deren Dateneingang an die erste Datenübertragungseinrichtung (31) angeschlossen ist,
- eine Vergleichseinheit (40), die zum Empfang von Steuersignalen (SS1), die die Bestandsapplikation (APP1) an die Eisenbahnanlage (20) übermittelt, und Steuersignalen (SS2) der zu testenden Applikation (APP2), die diese im Testbetrieb in Richtung des ersten Applikationsanschlusses (A1) ausgibt, geeignet ist, wobei die Vergleichseinheit (40) mit der Eisenbahnanlage (20) und der Bestandsapplikation (APP1) unidirektional und rückwirkungsfrei in Verbindung steht,
wobei die Vergleichseinheit (40) dazu ausgestaltet ist,
- zumindest auch dann auf eine inkorrekte Funktion der zu testenden Applikation (APP2) zu schließen, wenn die Steuersignale (SS2) der zu testenden Applikation (APP2) und die Steuersignale (SS1) der Bestandsapplikation (APP1) in einem vorgegebenen Testzeitraum voneinander abweichen oder über ein vorgegebenes Maß hinaus voneinander abweichen.

10. Testeinrichtung nach Anspruch 9,
- **dadurch gekennzeichnet, dass**
- die Testeinrichtung eine der Bestandsapplikation (APP1) übergeordnete Bedieneinheit (50) aufweist und
- die Vergleichseinheit (40) dazu ausgestaltet ist, erste Berichtssignale (BS1), die die Bestandsapplikation (APP1) an die Bedieneinheit (50) übermittelt, und zweite Berichtssignale (BS2), die die zu testende Applikation (APP2) ausgangsseitig ausgibt, zu vergleichen und auf eine inkorrekte Funktion der zu testenden Applikation (APP2) zumindest auch dann zu schließen, wenn die ersten und zweiten Berichtssignale (BS1, BS2) in dem vorgegebenen Testzeitraum voneinander abweichen oder über das oder ein anderes vorgegebene Maß hinaus voneinander abweichen.

11. Testeinrichtung nach Anspruch 10,
- **dadurch gekennzeichnet, dass**
- zusätzlich zu der ersten Datenübertragungseinrichtung (31) eine zweite Datenübertragungseinrichtung (32) vorhanden ist, die sowohl die Bestandsapplikation (APP1) als auch einen zweiten Applikationsanschluss (A2), über den die zu testende Applikation (APP2) an die zweite Datenübertragungseinrichtung (32) anschließbar ist, mit der Bedieneinheit (50) verbinden kann,
- wobei eine zweite Datendiode (D2) zwischen die zweite Datenübertragungseinrichtung (32) und den zweiten Applikationsanschluss (A2) geschaltet ist, und
- wobei die Datenflussrichtung der zweiten Datendiode (D2) in Richtung des zweiten Applikationsanschlusses (A2) ausgerichtet ist.

12. Testeinrichtung nach einem der voranstehenden Ansprüche 10 und 11,
- **dadurch gekennzeichnet, dass**
- zusätzlich eine dritte Datendiode (D3) zwischen die Vergleichseinheit (40) und die erste Datenübertragungseinrichtung (31) geschaltet ist,
- wobei die Datenflussrichtung der dritten Datendiode (D3) in Richtung der Vergleichseinheit (40) ausgerichtet ist.

13. Testeinrichtung nach einem der voranstehenden Ansprüche 11 bis 12,
- **dadurch gekennzeichnet, dass**
- zusätzlich eine vierte Datendiode (D4) zwischen die Vergleichseinheit (40) und die zweite Datenübertragungseinrichtung (32) geschaltet ist,
- wobei die Datenflussrichtung der vierten Datendiode (D4) in Richtung der Vergleichseinheit (40) ausgerichtet ist.
